# FASCICULE DE BREVET EUROPEEN

(11) **EP 0 850 675 B1**
(45) Date de publication et mention de la délivrance du brevet: **24.04.2002**
(21) Numéro de dépôt: 97480087.2
(22) Date de dépôt: 04.12.1997
(51) Int. Cl.: B01D 5/00

(54) **Dispositif compact de régénération de solvants**
Kompakte Vorrichtung zur Regeneration von Lösemitteln
Compact device for regenerating solvents

(30) Priorité: 24.12.1996 FR 9616241
(43) Date de publication de la demande: 01.07.1998
(73) Titulaire: TOURNAIRE, S.A., 06130 Grasse (FR)
(72) Inventeur: Chiocci, Jean Marie, 06530 Cabris (FR)
(74) Mandataire: Hautier, Jean-Louis

(56) Documents cités:
- WO-A-89/06716
- FR-A- 2 367 529
- FR-A- 2 551 988
- GB-A- 2 246 080

## Description

La présente invention concerne un dispositif de régénération de vapeurs chargés tels que des solvants.

Celui-ci est constitué d'une enceinte compacte renfermant des moyens qui permettent, de manière classique, la condensation et la décantation de vapeurs du solvant.

L'état de la technique est constitué de quelques documents intéressants.

*Ainsi, le document FR-A-2.551.988 a pour objet un procédé de régénération des solvants sales et une installation de mise en oeuvre du procédé. Selon le procédé, on réalise un mélange de solvant pollué et d'eau que l'on chauffe jusqu'à évaporation, puis on condense le mélange et par décantation, on récupère le solvant.*

*Selon l'invention, l'eau récupérée par décantation est réintroduite dans le mélange initial. L'installation de régénération comporte une bouilloire contenant le mélange de solvant à régénérer et d'eau, et des moyens de chauffage, ladite bouilloire est reliée par un conduit à une cuve de décantation où condense le mélange. La cuve présente une canalisation qui la relie à la bouilloire et qui débouche à la partie inférieure de ladite cuve.*

Ce système est très classique.

Il y a, tout d'abord, dans une bouilloire, deux opérations qui sont réalisées. D'une part, une évaporation est réalisée par chauffage et, d'autre part, une condensation est réalisée par refroidissement.

Il y a ensuite une décantation qui s'opère dans une cuve adjacente de la bouilloire.

Cet appareil est d'une structure complexe puisqu'il nécessite deux récipients, la bouilloire et la cuve.

De plus, les deux opérations d'évaporation et de condensation ne sont pas évidentes à mettre en oeuvre dans un même récipient, il est obligatoire d'utiliser des moyens d'isolation efficaces.

L'ensemble de ces caractéristiques grève le coût de fabrication d'un tel appareil.

*Le document FR-A-2.722.968 propose un appareil de nettoyage multifonctions qui comprend un récipient, un tube vertical d'aspiration pour l'entrée et l'ascension de l'air d'aspiration et des matières entraînées, une cloche contre laquelle sont projetées les matières qui se décantent et se déposent ensuite au fond du récipient, l'air, débarrassé des matières déposées, sortant par un autre tube vertical pour atteindre la boîte collectrice de poussière. Lorsque le récipient est rempli d'eau résultant de la condensation de vapeur, la coupure de l'alimentation en courant du moteur du dispositif d'aspiration est provoquée par une paire de contacts électriques qui sont mis en contact sous la poussée exercée par un flotteur en une matière isolante disposé à l'intérieur d'un compartiment qui communique avec le récipient par une ouverture verticale.*

Cet appareil permet la décantation et la condensation dans un seul récipient. Pourtant, il peut y avoir des problèmes.

Ainsi, le solvant est condensé par l'intermédiaire d'une simple cloche sur laquelle les matières à traiter sont protégées. Il y a de forte chance que la cloche va se réchauffer sous cette action et que son efficacité va diminuer jusqu'à devenir nulle.

De plus, une fois que le liquide est formé, la décantation doit s'opérer dans une enceinte qui va également pouvoir s'échauffer par transmission thermique entre la cloche et l'enceinte, le liquide traité pourra éventuellement s'évaporer, ce qui n'est pas souhaitable.

La présente invention a pour objet un dispositif de régénération de solvants qui est plus compact que les appareils actuels, où de nombreuses opérations sont effectuées à l'extérieur de l'appareil proprement dit. Il permet de supprimer un grand nombre de canalisations, d'accessoires de tuyauterie, de supportages et de diminuer la rétention de solvant.

L'invention propose de regrouper au sein d'une seule unité de traitement cinq fonctions différentes qui sont :
- la condensation
- le piégeage
- la décantation
- le stockage et,
- le refroidissement.

A cet effet, la présente invention concerne un dispositif de régénération de vapeurs chargés, tels que des solvants, constitué extérieurement d'une enceinte compacte comportant au moins une tubulure d'entrée des vapeurs émanant d'un réacteur et au moins deux sorties, d'une part, du solvant régénéré léger et lourd et, d'autre part, de substances à vidanger et contenant un moyen de condensation et un moyen de décantation, caractérisé par le fait que l'enceinte du dispositif contient, entre les moyens de condensation et de décantation, un moyen de collecte et, en aval de ces moyens de condensation, de collecte et de décantation, un moyen de stockage et un moyen de refroidissement.

Les moyens de condensation, de collecte, de décantation et de stockage sont implantés, dans cet ordre, verticalement du haut vers le bas dans l'enceinte monobloc et compacte ; le moyen, de refroidissement est implanté dans le moyen de stockage.

Le moyen de condensation est constitué d'un échangeur primaire et d'un échangeur piège qui fonctionnent sous vide.

La surface d'échange de l'échangeur primaire est sensiblement deux fois supérieure à celle de l'échangeur piège.

D'une part, l'échangeur primaire est alimenté en eau à température ambiante, soit sensiblement 20 à 30°C. D'autre part, l'échangeur piège est alimenté en un fluide, tel que l'eau glycolée, dont la température est négative.

Le moyen de collecte est constitué par un collecteur de condensats qui est en pente et comporte, au point le plus bas, une goulotte d'écoulement.

Le moyen de décantation est constitué par un récipient ou décanteur dans lequel plonge la goulotte du moyen de collecte ; le décanteur comporte au moins une tubulure de sortie en position haute du décanteur, du solvant léger et au moins une tubulure de sortie, en position basse du décanteur de solvant lourd.

Les tubulures de sortie de solvants lourd et léger aboutissent à une vanne de réglage de l'interface des solvants lourd/léger, à une tubulure de reflux vers le réacteur, et/ou au moyen de stockage.

Le moyen de stockage est constitué de deux compartiments, l'un plus particulièrement destiné à recevoir le solvant lourd, l'autre plus particulièrement destiné à recevoir le solvant léger.

Le compartiment recevant le solvant léger contient, en son sein, le moyen de refroidissement qui permet d'abaisser la température d'ébullition dudit solvant et de le maintenir sous forme liquide.

Chaque compartiment du moyen de stockage comporte, en position la plus basse, une tubulure de vidange de fond de cuve.

Les dessins ci-joints sont donnés à titre d'exemples indicatifs et non limitatifs. Ils représentent un mode de réalisation préféré selon l'invention. Ils permettront de comprendre aisément l'invention.

La figure 1 représente une vue latérale d'un dispositif de régénération selon l'invention.

La figure 2 représente une vue en coupe longitudinale du dispositif selon l'invention.

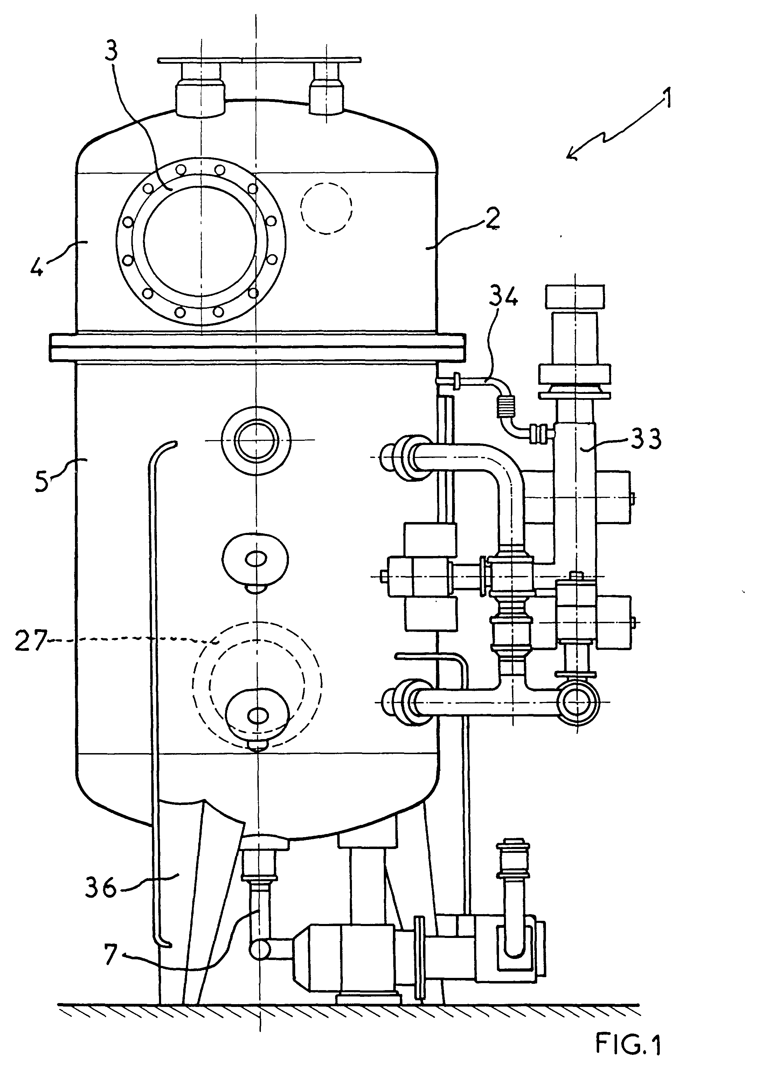

La présente invention concerne un dispositif de régénération 1 pour les solvants ou tout autre type de liquides. Un tel dispositif 1 est bien représenté sur la figure 1. Il est essentiellement constitué par une enceinte compacte 2.

Cette enceinte 2 est constitué de deux parties essentielles. D'une part, une cloche supérieure 4 et d'autre part une cloche inférieure 5, les deux cloches 4 et 5 étant reliées l'une à l'autre par des moyens de fixation non représentés. La cloche inférieure 5 repose sur le sol par l'intermédiaire de pieds 36 qui stabilisent l'ensemble.

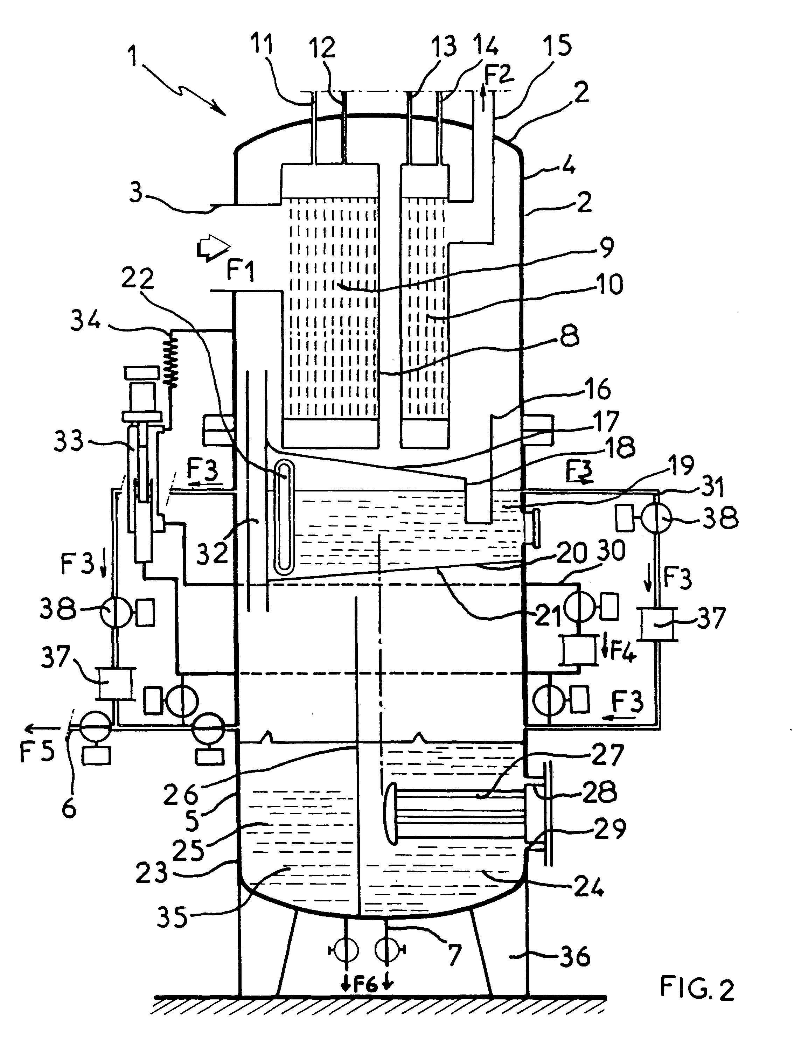

On remarque, en vue de face, sur la figure 1, mais également en vue en coupe de profil, sur la figure 2, la présence de la tubulure d'entrée 3 des vapeurs provenant du réacteur non représenté sur les figures. Les vapeurs sont introduites selon F1 à l'intérieur du dispositif de régénération 1.

Latéralement à l'enceinte 2 est présente une vanne de réglage 33 de l'interface du solvant lourd/léger.

Selon la figure 2, l'ensemble des constituants est bien représenté en vue en coupe longitudinale. Il y a cinq éléments essentiels qui sont superposés du haut vers le bas à l'intérieur de ladite enceinte 2. Il s'agit tout d'abord du moyen de condensation 8 puis du moyen de collecte 16, ensuite du moyen de décantation 20, puis du moyen de stockage 23, et enfin du moyen de refroidissement 27.

Bien entendu s'il y a une entrée, selon F1, des vapeurs par l'intermédiaire de la tubulure 3, il est nécessaire également de prévoir une sortie. Ces sorties sont présentes au niveau de la cloche inférieure 5, d'une part, latéralement pour permettre l'évacuation par l'intermédiaire d'une tubulure de sortie du solvant régénéré 6 selon F5 et, d'autre part, en partie inférieure une tubulure de sortie 7 des substances à éliminer selon F6. Ces tubulures 7 ayant une fonction de vidange des solvants lourds.

En ce qui concerne le moyen de condensation 8, celui-ci est constitué de deux échangeurs parallèles l'un par rapport à l'autre. L'échangeur primaire 9 et l'échangeur piège 10 sont en position sensiblement verticale et parallèle. L'échangeur primaire 9 comporte une surface d'échange de sensiblement 24m² selon le mode de réalisation représenté. Quel que soit le mode de réalisation, la surface d'échange est adaptée aux débits à condenser. Il est associé à deux tuyaux 11 et 12 permettant, d'une part, l'alimentation en eau 11 et, d'autre part, la sortie 12 de cette eau et ce, afin de prévenir tout échauffement dudit échangeur 9.

Cet échangeur primaire 9 est efficace pour la majeure partie des vapeurs, dans le cas présent 98% de ces vapeurs, qui sont introduites selon F1.

De la même façon, l'échangeur piège 10 comporte un tuyau d'alimentation 13 en eau et un tuyau de sortie 14 de cette même eau.

Dans le cas de l'échangeur piège 10, la température de l'eau doit être plus basse ; pour ce faire, on peut utiliser de l'eau glycolée qui descend la température de formation des cristaux.

L'échangeur piège 10 est d'une surface sensiblement deux fois inférieure à celle de l'échangeur primaire 9 soit 12m², dans le cas qui nous intéresse. Là encore, la surface d'échange est adaptée aux débits à condenser.

D'autre part, pour améliorer encore le fonctionnement dudit échangeur piège 10 qui va permettre de condenser les 2% de vapeurs qui n'ont pû être condensées par l'échangeur primaire 9, on dispose d'un tuyau de mise sous vide 15 qui est associé audit échangeur 10. Dans ce cas, l'air est aspiré selon F2, par un dispositif classique non représenté sur les figures.

Les vapeurs qui pénètrent selon F1, par l'intermédiaire de la tubulure 3, vont donc être transformées en un liquide par le moyen de condensation 8. Ce liquide va s'écouler à l'intérieur du moyen de décantation 20 qui est constitué par un récipient ou décanteur 21.

Le fond de ce récipient ou décanteur 21 est incliné pour avoir un point bas dont l'utilité apparaîtra dans la description ci-après.

Entre ces moyens de condensation 8 et de décantation 20 est présent le moyen de collecte 16 qui permet la récupération du solvant condensé 19 par l'intermédiaire d'un collecteur 17 qui, lui-aussi, possède un fond incliné se terminant, au niveau de la position la plus basse par une goulotte d'écoulement 18.

On remarque, sur les dessins, que la pente du moyen de collecte 16 est opposée à la pente du moyen de décantation 20, de sorte que la goulotte 18 correspondant au point le plus bas du moyen de collecte 16 est situé au niveau de l'enceinte 2 qui est opposé au lieu d'implantation du point le plus bas du décanteur 21 proche également de ladite enceinte 2.

Au niveau de ce décanteur 21 est présente une quantité importante de solvant condensé qui, dans l'exemple représenté, peut être de 150 litres, le niveau du solvant condensé 19 peut être facilement visualisé par l'opérateur, par l'intermédiaire d'un hublot oblong 22. Celui-ci permet de visualiser et de régler le niveau de l'interface entre les deux solvants.

Dans ce mode de réalisation, la goulotte d'écoulement 18 trempe à l'intérieur du solvant condensé 19 qui est à l'intérieur du décanteur 21.

Au niveau du récipient ou décanteur 21, sont présentes des tubulures qui permettent la sortie du solvant. Néanmoins, deux types de solvant sont disponibles. D'une part, un solvant lourd qui se trouve au fond du décanteur 21, et d'autre part, un solvant léger situé en position supérieure du solvant condensé 19 présent dans ledit décanteur 21.

Il y a donc, en partie inférieure dudit décanteur 21, c'est-à-dire au niveau du point le plus bas de celui-ci, une tubulure de sortie 30 du solvant lourd. En fait, il y a deux sorties représentées latéralement qui permettent, soit une introduction dudit solvant lourd au niveau de la vanne de réglage 33 de l'interface du solvant lourd/léger, soit l'introduction dudit solvant lourd à l'intérieur du moyen de stockage 23.

La vanne de réglage 33 comporte également un évent 34 de mise à la pression de l'enceinte 2 de ladite vanne 33. Cet évent 34 ayant pour fonction de stabiliser les pressions à l'intérieur de l'enceinte 2 et de la vanne 33.

Les tubulures de sortie 30 du solvant lourd permettent donc le transfert, selon F4, de celui-ci vers le moyen de stockage 23.

De la même façon, les tubulures de sortie 31 du solvant léger permettent, soit l'approvisionnement du moyen de stockage 23, soit la sortie, par l'intermédiaire de la tubulure 6.

Les mouvements du solvant léger s'effectuent selon F3.

Dans un des cas, les tubulures 30 et 31 permettent l'approvisionnement en solvants lourd et léger du moyen de stockage 23.

Celui-ci 23 est essentiellement constitué de deux compartiments différents 24 et 25. Il y a, d'une part, un compartiment à grande capacité 24 qui est situé à la droite de la figure 2 et, d'autre part, un compartiment à petite capacité 25 situé à la gauche de cette figure 2.

En fait, la contenance de ces réservoirs est de 240 litres pour le compartiment à grande capacité 24 et de 140 litres pour le compartiment à petite capacité 25.

Entre ces deux compartiments 24 et 25 est donc présente une paroi verticale 26 de séparation.

En règle générale, le solvant léger est orienté vers le compartiment de grande capacité 24 car celui-ci comporte, en son sein, un moyen de refroidissement 27. Ce moyen de refroidissement 27 permet de refroidir le solvant qui est présent dans ledit compartiment 24.

Or, le solvant, ayant la température d'évaporation la plus faible, est dirigé préférentiellement vers le compartiment 24 qui comporte le moyen de refroidissement

Dans le cas où les températures d'ébulition des deux solvants lourd et léger sont proches l'une de l'autre, on peut envisager la mise en place d'un moyen de refroidissement similaire au moyen de refroidissement 27 situé dans le compartiment 25 du moyen de stockage 23.

Pour le bon fonctionnement du moyen de refroidissement 27, celui-ci comporte un tuyau d'alimentation en eau 28 et un tuyau de sortie de l'eau 29.

On peut également utiliser tout autre type de substance permettant d'avoir une température adéquate du solvant, tel que l'azote liquide.

On pourrait également et éventuellement jouer sur la pression de la substance introduite dans les tubulures du moyen de refroidissement ou échangeur tubulaire 27.

Pour la sécurité de l'ensemble du dispositif de régénération 1, des capteurs, non représentés sur les figures, sont présents au niveau des moyens de stockage 23.

Ainsi, au fond de chaque compartiment 24 et 25, sont présents des capteurs permettant d'indiquer si du solvant est, ou non, présent.

D'autre part, au niveau supérieur en position inférieure au décanteur 21, sont présents également deux capteurs, non représentés sur les figures, qui permettent d'avertir quand un trop-plein est susceptible d'intervenir. Néanmoins, si l'opérateur n'intervenait pas, le liquide pourrait éventuellement s'évacuer par l'intermédiaire du tube d'équilibrage 32 de la pression et de déverse de sécurité du solvant régénéré 35.

Bien entendu, pour le bon fonctionnement de l'ensemble de l'appareil, sont présents des manchons transparents 37 permettant de bien visualiser l'écoulement qui peut se produire selon F3 ou selon F4 dans l'ensemble des tuyaux et tubulures.

Il y a également des électrovannes 38 qui permettent de stopper cet écoulement ou de l'orienter selon les nécessités.

### REFERENCES

- 1.: Dispositif de régénération de solvants
- 2.: Enceinte compacte
- 3.: Tubulure d'entrée des vapeurs
- 4.: Cloche supérieure de l'enceinte 2
- 5.: Cloche inférieure de l'enceinte 2 ou fond à grand rayon de carre
- 6.: Tubulure de sortie du solvant régénéré
- 7.: Tubulure de sortie des substances à vidanger
- 8.: Moyen de condensation
- 9.: Echangeur primaire du moyen 8
- 10.: Echangeur piège du moyen 8
- 11.: Tuyau d'alimentation en eau de l'échangeur 9
- 12.: Tuyau de sortie de l'eau de l'échangeur 9
- 13.: Tuyau d'alimentation en eau glycolée de l'échangeur 10
- 14.: Tuyau de sortie de l'eau glycolée de l'échangeur 10
- 15.: Tuyau de mise sous vide du dispositif 1
- 16.: Moyen de collecte
- 17.: Collecteur du solvant condensé du moyen 16
- 18.: Goulotte d'écoulement du moyen 16
- 19.: Solvant condensé
- 20.: Moyen de décantation
- 21.: Récipient ou décanteur du moyen 20
- 22.: Hublot oblong de contrôle visuel
- 23.: Moyen de stockage
- 24.: Compartiment à grande capacité du moyen 23
- 25.: Compartiment à petite capacité du moyen 23
- 26.: Paroi verticale de séparation des compartiments 24 et 25
- 27.: Moyen de refroidissement ou échangeur tubulaire
- 28.: Tuyau d'alimentation en eau du moyen 27
- 29.: Tuyau de sortie en eau du moyen 27
- 30.: Tubulure de sortie du solvant lourd
- 31.: Tubulure de sortie du solvant léger
- 32.: Tube d'équilibrage de la pression et de déverse de sécurité
- 33.: Vanne de réglage de l'interface du solvant lourd-léger
- 34.: Event de la vanne 33 de mise à la pression de l'enceinte 2
- 35.: Solvant condensé et décanté dit "solvant régénéré"
- 36.: Pied du dispositif 1
- 37.: Manchons transparents pour visualiser l'écoulement
- 38.: Electrovannes
- F1.: Entrée des vapeurs de solvants provenant du réacteur
- F2.: Sortie d'air
- F3.: Transfert du solvant léger
- F4.: Transfert du solvant lourd
- F5.: Sortie du solvant régénéré
- F6.: Evacuation des substances à vidanger

## Revendications

1. Dispositif de régénération (1) de vapeurs chargés, tels que des solvants, constitué extérieurement d'une enceinte compacte (2) comportant au moins une tubulure d'entrée (3) des vapeurs émanant d'un réacteur et au moins deux sorties, d'une part, du solvant régénéré (6) et, d'autre part, de substances à vidanger (7) et contenant un moyen de condensation (8) et un moyen de décantation (20) **caractérisé par le fait**
**que** l'enceinte (2) du dispositif (1) contient, entre les moyens de condensation (8) et de décantation (20), un moyen de collecte (16) et, en aval de ces moyens de condensation (8) de collecte (16) et de décantation (20), un moyen de stockage (23) et un moyen de refroidissement (27).

2. Dispositif, selon la revendication 1, **caractérisé par le fait**
**que** les moyens de condensation, de collecte, de décantation et de stockage sont implantés, dans cet ordre, verticalement du haut vers le bas dans l'enceinte monobloc et compacte ; le moyen de refroidissement est implanté dans le moyen de stockage.

3. Dispositif, selon l'une quelconque des revendications 1 ou 2, **caractérisé par le fait**
**que** le moyen de condensation est constitué d'un échangeur primaire (9) et d'un échangeur piège (10) qui fonctionnent sous vide.

4. Dispositif, selon la revendication 3, **caractérisé par le fait**
**que** la surface d'échange de l'échangeur primaire (9) est sensiblement deux fois supérieure à celle de l'échangeur piège (10).

5. Dispositif, selon la revendication 4, **caractérisé par le fait**
**que** l'échangeur primaire (9) est alimenté en eau à température ambiante, soit sensiblement 20 à 30°C, et
**que** l'échangeur piège (10) est alimenté en un fluide, tel que de l'eau glycolée, dont la température est négative.

6. Dispositif, selon l'une quelconque des revendications 1 ou 2, **caractérisé par le fait**
**que** le moyen de collecte (16) est constitué par un collecteur de condensats (17) qui est en pente et comporte, au point le plus bas, une goulotte d'écoulement (18).

7. Dispositif, selon l'une quelconque des revendications 1, 2 ou 6, **caractérisé par le fait**
**que** le moyen de décantation (20) est constitué par un récipient ou décanteur (21) dans lequel plonge la goulotte du moyen de collecte (16) ; le décanteur comporte au moins une tubulure de sortie en position haute du décanteur, du solvant léger et au moins une tubulure de sortie, en position basse du décanteur de solvant lourd.

8. Dispositif, selon la revendication 7, **caractérisé par le fait**
**que** les tubulures de sortie (6) de solvants lourd et léger aboutissent à une vanne de réglage (33) de l'interface des solvants lourd/léger, à une tubulure de reflux vers le réacteur, et/ou au moyen de stockage (23).

9. Dispositif, selon l'une quelconque des revendications 1, 2 ou 8, **caractérisé par le fait**
**que** le moyen de stockage (23) est constitué de deux compartiments (24 et 25), l'un (23) plus particulièrement destiné à recevoir le solvant lourd, l'autre (24) plus particulièrement destiné à recevoir le solvant léger.

10. Dispositif, selon la revendication 9, **caractérisé par le fait**
**que** le compartiment (24) recevant le solvant léger contient, en son sein, le moyen de refroidissement (27) qui permet d'abaisser la température d'ébullition dudit solvant et de le maintenir sous forme liquide.

11. Dispositif, selon l'une quelconque des revendications 1, 2, 8, 9 ou 10, **caractérisé par le fait**
**que** chaque compartiment (24 et 25) du moyen de stockage (23) comporte, en position la plus basse, une tubulure de vidange (7) de fond de cuve.

## Claims

1. Device for regeneration of charged vapor (1), such as solvents, made up of a compact vessel (2) on the outside comprising at least one inlet nozzle (3) for the vapor emanating from a reactor and at least two outlet nozzles on the one hand for the regenerated solvent (6) and on the other hand for substances to be drained off (7), and containing a facility for condensation (8) and a facility for decantation (20) **characterized by** the fact
that the vessel (2) of device (1) contains, between the facilities for condensation (8) and decantation (20), a facility for collection (16) and, downstream from these facilities for condensation (8), collection (16) and decantation (20), a facility for storage (23) and a facility for cooling (27).

2. Device, according to claim 1, **characterized by** the fact
that the facilities for condensation, collection, decantation and storage are installed, in this order, vertically top downwards in the one-piece and compact vessel; the facility for cooling being installed in the facility for storage.

3. Device, according to any of the claims 1 or 2, **characterized by** the fact
that the facility for condensation consists of a primary heat exchanger (9) and a trap exchanger (10) which function in a vacuum.

4. Device, according to claim 3, **characterized by** the fact
that the heat-transfer surface of the primary heat exchanger (9) is roughly twice that of the trap exchanger (10).

5. Device, according to claim 4, **characterized by** the fact
that the primary heat exchanger (9) is supplied with water at ambient temperature, that is to say appreciably 20 to 30°C, and
that the trap exchanger (10) is supplied with a fluid, such as glycolated water, at a negative temperature.

6. Device, according to any of the claims 1 or 2, **characterized by** the fact
that the facility for collection (16) consists of a condensate header (17) which is inclined and comprises, at the lowest point, a spout (18).

7. Device, according to any of claims 1, 2 or 6, **characterized by** the fact
that the facility for decantation (20) consists of a container or decanter (21) into which feeds the spout of the facility for collection (16); the decanter comprises at least one outlet nozzle in a high position on the decanter for light solvent and at least one outlet nozzle, in a low position on the heavy solvent decanter.

8. Device, according to claim 7, **characterized by** the fact
that the outlet nozzles (6) for the heavy and light solvents lead to a valve (33) controlling the heavy/light solvent interface, to a reflux nozzle towards the reactor, and/or the storage facility (23).

9. Device, according to any of claims 1, 2 or 8, **characterized by** the fact
that the facility for storage (23) consists of two compartments (24 and 25), one (23) more particularly intended to receive the heavy solvent, the other (24) more particularly intended to receive light solvent.

10. Device, according to claim 9, **characterized by** the fact
that the compartment (24) receiving the light solvent contains, in its inside, the cooling facility (27) for lowering the boiling point of the aforesaid solvent and maintaining it in liquid form.

11. Device, according to any of claims 1, 2, 8, 9 or 10, **characterized by** the fact
that each compartment (24 and 25) of the storage facility (23) comprises, in the lowest position, a vessel bottom drainage nozzle (7).

## Patentansprüche

1. Vorrichtung zur Regenerierung (1) von belasteten Dämpfen, wie zum Beispiel Lösungsmitteln, bestehend aus einer kompakten äußeren Hülle (2) mit mindestens einem Eingangsstutzen (3) für die Dämpfe eines Reaktors und mindestens zwei Ausgängen, je einem für das regenerierte Lösungsmittel 6) und die abzuleitenden Substanzen (7), welche ein Kondensations- (8) und ein Dekantierungsmittel (20) enthält und **dadurch gekennzeichnet ist, dass** die Hülle (2) der Vorrichtung (1) zwischen dem Kondensations- (8) und Dekantierungsmittel (20) ein Sammelmittel (16) und im Anschluss an das Kondensations- (8), Sammel- (16) und Dekantierungsmittel (20) ein Lagermittel (23) und eine Kühleinrichtung (27) enthält.

2. Vorrichtung nach Anspruch 1, **gekennzeichnet dadurch, dass** die Mittel zum Kondensieren, Sammeln, Dekantieren und Lagern in dieser Reihenfolge senkrecht von oben nach unten in einer kompakten, aus einem Stück bestehenden Hülle angeordnet sind, wobei die Kühleinrichtung im Lagermittel installiert ist.

3. Vorrichtung nach einem der Ansprüche 1 oder 2, **gekennzeichnet dadurch, dass** das Mittel zum Kondensieren aus einem Primärwärmetauscher (9) und einem Abscheide-Wärmetauscher (10) besteht, die unter Vakuum arbeiten.

4. Vorrichtung nach Anspruch 3, **gekennzeichnet dadurch, dass** die Oberfläche des Primärwärmetauschers (9) in etwa zwei mal größer ist, als die des Abscheide-Wärmetauschers (10).

5. Vorrichtung nach Anspruch 4, **gekennzeichnet dadurch, dass** der Primärwärmetauscher (9) mit Wasser auf Raumtemperatur, d.h. etwa 20 bis 30°C warm, beschickt wird und dass der Abscheide-Wärmetauscher (10) mit einem Fluid versorgt wird, zum Beispiel mit glykolhaltigem Wasser, dessen Temperatur negativ ist.

6. Vorrichtung nach einem der Ansprüche 1 oder 2, **gekennzeichnet dadurch, dass** das Sammelmittel (16) aus einem Kondensatsammler (17) besteht, der schräg angeordnet ist und am untersten Punkt eine Ablaufrinne (18) besitzt.

7. Vorrichtung nach einem der Ansprüche 1, 2 oder 6, **gekennzeichnet dadurch, dass** das Mittel zum Dekantieren (20) aus einem Behälter oder Absetzgefäß (21) besteht, in welches die Ablaufrinne des Sammelmittels (16) eintaucht, wobei das Absetzgefäß mindestens einen Ausgangsstutzen für leichte Lösungsmittel in seinem oberen Bereich und mindestens einen Ausgangsstutzen für schwere Lösungsmittel in seinem unteren Bereich besitzt.

8. Vorrichtung nach Anspruch 7, **gekennzeichnet dadurch, dass** die Ausgangsstutzen (6) für das leichte und schwere Lösungsmittel auf ein Stellventil (33) an der Schnittstelle des leichten und schweren Lösungsmittels, auf eine Rückleitung in den Reaktor und/oder auf das Lagermittel (23) geführt werden.

9. Vorrichtung nach einem der Ansprüche 1, 2 oder 8, **gekennzeichnet dadurch, dass** das Lagermittel (23) aus zwei Kammern (24 und 25) besteht, von denen eine (23) vor allem zur Aufnahme des schweren Lösungsmittels und die andere (24) des leichten Lösungsmittels bestimmt ist.

10. Vorrichtung nach Anspruch 9, **gekennzeichnet dadurch, dass** die Kammer (24) zur Aufnahme des leichten Lösungsmittels die Kühleinrichtung (27) enthält, mit der die Siedetemperatur des betreffenden Lösungsmittels gesenkt und dieses in flüssiger Form erhalten werden kann.

11. Vorrichtung nach einem der Ansprüche 1, 2, 8,9 oder 10, **gekennzeichnet dadurch, dass** jede Kammer (24 und 25) des Lagermittels (23) im untersten Punkt des Behälterbodens einen Ablassstutzen (7) besitzt.
